(19) Europäisches Patentamt / European Patent Office / Office européen des brevets

(11) **EP 3 594 298 A1**

(12) **EUROPEAN PATENT APPLICATION**
published in accordance with Art. 153(4) EPC

(43) Date of publication:
**15.01.2020 Bulletin 2020/03**

(21) Application number: **18764199.8**

(22) Date of filing: **07.03.2018**

(51) Int Cl.:
*C09D 11/52* (2014.01)    *C09D 5/24* (2006.01)
*C09D 7/40* (2018.01)    *C09D 201/00* (2006.01)
*H01B 1/00* (2006.01)    *H01B 1/22* (2006.01)
*H01B 5/14* (2006.01)    *H01B 13/00* (2006.01)

(86) International application number:
**PCT/JP2018/008699**

(87) International publication number:
**WO 2018/164166 (13.09.2018 Gazette 2018/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.03.2017 JP 2017043320**

(71) Applicant: **DOWA Electronics Materials Co., Ltd.**
**Tokyo 101-0021 (JP)**

(72) Inventors:
• **SATO, Kimitaka**
**Tokyo 101-0021 (JP)**
• **KODAMA, Daisuke**
**Tokyo 101-0021 (JP)**
• **KANASUGI, Minami**
**Tokyo 101-0021 (JP)**
• **UEYAMA, Toshihiko**
**Tokyo 101-0021 (JP)**
• **KURITA, Satoru**
**Tokyo 101-0021 (JP)**

(74) Representative: **Wimmer, Hubert**
**Wagner & Geyer Partnerschaft mbB**
**Patent- und Rechtsanwälte**
**Gewürzmühlstrasse 5**
**80538 München (DE)**

(54) **METHOD FOR PRODUCING SILVER NANOWIRE INK, SILVER NANOWIRE INK AND TRANSPARENT CONDUCTIVE COATING FILM**

(57)    [Problem]
To provide a method for producing nanowires that has high industrial practicability and a conductive film that has high transparency and high conductivity.
[Solution]
A method for producing a silver nanowire ink, including mixing urethane resin particles having an average particle diameter of 200 nm or less, containing a urethane resin having a degree of elongation of less than 500%, with a silver nanowire dispersion liquid. The urethane resin may have an average value of 100% modulus (100% Mo), for example, of 6.0 MPa or more. The content of the urethane resin colloid or the urethane resin emulsion may be from 0.01 to 2.0% by mass based on the total amount of the silver nanowire ink. The content of silver is preferably from 0.01 to 2.0% by mass based on the total amount of the silver nanowire ink. The content of the viscosity modifier is preferably from 0.01 to 2.0% by mass based on the total amount of the silver nanowire ink.

EP 3 594 298 A1

**Description**

Technical Field

The present invention relates to a method for producing a silver nanowire ink that is useful as a material for forming a transparent conductive coated film, and the like. The invention also relates to the silver nanowire ink and a transparent conductive coated film using the same.

Background Art

In the description herein, fine metal wires having a thickness of approximately 200 nm or less are referred to as "nanowires". A liquid having silver nanowires dispersed therein that particularly has properties, such as viscosity, controlled in consideration of coating on a substrate is referred to as a "silver nanowire ink". The operation of adding a binder component, a viscosity modifier, and the like to a liquid having silver nanowires dispersed therein is referred to as "ink formation". A transparent coated film obtained by coating and drying a silver nanowire ink on a substrate that exhibits conductivity through contact of the wires is referred to as a transparent conductor.

Silver nanowires are expected as a conductive material for imparting conductivity to a transparent substrate. By coating a liquid containing silver nanowires (i.e., a silver nanowire ink) on a transparent substrate, such as glass, PET (polyethylene terephthalate), and PC (polycarbonate), followed by removing the liquid component through evaporation or the like, the silver nanowires are in contact with each other on the substrate to form a conductive network, thereby achieving a transparent conductor. With the progress of the investigation of the technique for producing thin and long silver nanowires in recent years, a transparent conductor using silver nanowires is being enhanced in conductivity and anti-haze characteristics.

As one example of the method for producing silver nanowires, such a method has been known that a silver compound is dissolved in a polyol solvent, such as ethylene glycol, and metallic silver having a linear shape is deposited by utilizing the reduction power of the polyol as the solvent in the presence of a halogen compound and PVP (polyvinylpyrrolidone) as an organic protective agent (see PTL 1). PVP is a compound that is significantly effective as an organic protective agent for synthesizing silver nanowires in good yield. Silver nanowires having a surface protected with PVP are obtained by the method.

The production of a transparent conductor by using silver nanowires requires a step of coating a "silver nanowire ink" on a transparent substrate. The ordinary silver nanowires covered with PVP show good dispersibility in water, and therefore are generally provided in the form of a silver nanowire dispersion liquid using an aqueous liquid medium. However, due to the necessity of the improvement in wettability to PET (polyethylene terephthalate), which is frequently used as the transparent substrate, an alcohol, such as ethanol, 2-propanol, and ethylene glycol, is generally added to the aqueous solvent of the silver nanowire ink. With an increased amount of the alcohol added, the wettability to a PET substrate is enhanced. However, the addition of an alcohol has a problem that the silver nanowires covered with PVP are decreased in dispersibility in the liquid. Specifically, in the case where the amount of the alcohol added to the aqueous solvent is increased, the silver nanowires covered with PVP tend to aggregate in the liquid. Accordingly, for improving the dispersibility of a silver nanowire ink using silver nanowires covered with PVP, a method of adding a surfactant, such as a fluorinated series, a nonionic series, and a cationic series, is employed. However, in the case where the silver nanowire ink having the surfactant added thereto is used, the contact resistance among the nanowires is increased due to the coordination of the surfactant on the surface of the silver nanowires, and the resulting conductive film has an increased sheet resistance.

It has been known that the use of silver nanowires having a surface protected with a copolymer of vinylpyrrolidone and an additional monomer, instead of PVP can improve the dispersibility in water and an alcohol without the addition of the surfactant as like above (see PTLs 2 and 3).

Citation List

Patent Literatures

PTL 1: JP-A-2009-505358
PTL 2: JP-A-2015-174922
PTL 3: JP-A-2015-180772

Summary of Invention

Technical Problem

As described above, the production of a transparent conductor by using silver nanowires requires a step of coating a "silver nanowire ink" on a transparent substrate. For performing the coated film forming step industrially, and preventing the resulting transparent conductive coated film from being peeled off from the substrate, such a silver nanowire ink is necessary that is capable of sufficiently ensuring the adhesiveness among the silver nanowires and the adhesiveness between the silver nanowires and the substrate. A binder component functioning as an "adhesive" mixed in the silver nanowire ink is effective for the enhancement of the adhesiveness. However, the binder component mixed therein may be a factor of the decrease of the conductivity, the decrease of the light transmittance, and the decrease of the clear visibility due to light reflection (i.e., the increase of haze).

Furthermore, a coated film exposed to irradiation of an ultraviolet ray or a visible ray contained in the sunlight or the like is generally changed in characteristics with the lapse of time. For the transparent conductive coated film, the change with the lapse of time frequently emerges as the "decrease of the conductivity", and for a conductive film for the purpose of a touch-sensitive panel of a portable terminal frequently used outdoors, it is important to enhance the durability against light (which may be hereinafter referred to as "light durability").

An object of the invention is to provide a conductive film that has a low resistance for ensuring conductivity and a low haze value for ensuring clear visibility. A second object thereof is to provide the aforementioned conductive film that has high light durability.

Solution to Problem

For achieving the aforementioned objects, the invention provides a method for producing a silver nanowire ink, including mixing a water solvent or a mixed solvent of water and an alcohol having silver nanowires dispersed therein, with a viscosity modifier and a urethane resin colloid or a urethane resin emulsion. In particular, it is preferred that the urethane resin has a degree of elongation of less than 500%, and the urethane resin has an average particle diameter of 200 nm or less. The degree of elongation of the urethane resin may be less than 500%. The degree of elongation (which may be shown as "elongation" or "breaking elongation" depending on the disclosed data) is described in JIS K7311-1995 (the test method for polyurethane thermoplastic elastomers) and JIS K6251:2010 (vulcanized rubber and thermoplastic rubber, the method for obtaining tensile characteristics).

The urethane resin may have an average value of 100% modulus (100% Mo) of 6.0 MPa or more. The average value of 100% modulus means a single value in the case where only the single value is obtained, and means an average value in the case where values with a certain range are obtained. The 100% modulus is described in JIS K7311-1995 (the test method for polyurethane thermoplastic elastomers) and JIS K6251:2010 (vulcanized rubber and thermoplastic rubber, the method for obtaining tensile characteristics).

The content of the urethane resin may be from 0.005 to 2.0% by mass based on the total amount of the silver nanowire ink. The content of silver is preferably from 0.01 to 2.0% by mass based on the total amount of the silver nanowire ink.

The urethane resin preferably contains a hydrophilic group in a urethane structure thereof. The structure is suitable since the urethane resin can be emulsified by dispersing in the ink without the use of an additional substance, such as a surfactant.

Specifically, the following inventions are described.

[1] A method for producing a silver nanowire ink, including mixing urethane resin particles having an average particle diameter of 200 nm or less, containing a urethane resin having a degree of elongation of less than 500%, with a silver nanowire dispersion liquid.

[2] The method for producing a silver nanowire ink according to the item [1], wherein the urethane resin has an average value of 100% modulus (100% Mo) of 6.0 MPa or more.

[3] The method for producing a silver nanowire ink according to the item [1] or [2], wherein the silver nanowire ink has a content of the urethane resin of from 0.005 to 2.0% by mass based on the total amount of the silver nanowire ink.

[4] The method for producing a silver nanowire ink according to any one of the items [1] to [3], wherein the silver nanowire ink has a content of silver of from 0.01 to 2.0% by mass based on the total amount of the silver nanowire ink.

[5] The method for producing a silver nanowire ink according to any one of the items [1] to [4], wherein the urethane resin contains a hydrophilic group in a urethane structure thereof.

[6] The method for producing a silver nanowire ink according to any one of the items [1] to [5], wherein the urethane resin has a polycarbonate skeleton.

[7] The method for producing a silver nanowire ink according to any one of the items [1] to [6], wherein the silver nanowires dispersed in the liquid have an average diameter of 50 nm or less and an average length of 10 μm or more.

[8] The method for producing a silver nanowire ink according to the item [7], wherein the silver nanowires dispersed in the liquid have an average aspect ratio of 250 or more, wherein the average aspect ratio is a ratio of the average length (nm) and the average diameter (nm).

[9] A silver nanowire ink containing silver nanowires in water or a mixed solvent of water and an alcohol, and a urethane resin added thereto, providing a haze of 0.8% or less in the form of a dried coated film having a sheet resistance of from 40 to 60 Ω/sq.

[10] The silver nanowire ink according to the item [9], wherein the silver nanowire ink provides a transmittance of light of 98.5% or more in the form of a dried coated film having a sheet resistance of from 40 to 60 Ω/sq.

[11] The silver nanowire ink according to the item [9] or [10], wherein the urethane resin has a polycarbonate skeleton.

[12] The silver nanowire ink according to any one of the items [9] to [11], wherein the silver nanowire ink has a content of the silver nanowires of from 0.01 to 2.0% by mass.

[13] The silver nanowire ink according to any one of the items [9] to [12], wherein the silver nanowire ink has an amount of the urethane resin added of from 0.005 to 2.0% by mass.

[14] The silver nanowire ink according to any one of the items [9] to [13], wherein the silver nanowire ink contains a viscosity modifier added thereto in an amount of from 0.01 to 2.0% by mass.

[15] The silver nanowire ink according to any one of the items [9] to [14], wherein the silver nanowires dispersed in the liquid have an average diameter of 50 nm or less and an average length of 10 μm or more.

[16] The silver nanowire ink according to the item [15], wherein the silver nanowires dispersed in the liquid have an average aspect ratio of 250 or more, wherein the average aspect ratio is a ratio of the average length (nm) and the average diameter (nm).

[17] A transparent conductive coated film including a dried coated film containing the silver nanowire ink according to any one of the items [9] to [16] as a coating composition, having a sheet resistance of from 40 to 60 Ω/sq and a haze of 0.8% or less.

[18] The transparent conductive coated film according to the item [17], wherein the transparent conductive coated film has a transmittance of light of 98.5% or more.

[19] The transparent conductive coated film according to the item [17] or [18], wherein the substrate is glass, PET (polyethylene terephthalate), PEN (polyethylene naphthalate), PC (polycarbonate), PES (polyether sulfone), PAR (polyarylate), APO (amorphous polyolefin), or an acrylic resin.

Advantageous Effects of Invention

According to the invention, a conductive film that has a low resistance for ensuring conductivity and a low haze value for ensuring clear visibility can be obtained. Furthermore, the aforementioned conductive film that has high light durability can be achieved.

Description of Embodiments

[Covering Material of Silver Nanowires]

As an embodiment described herein, an example using a copolymer of vinylpyrrolidone and diallyldimethylammonium salt monomer, a monomer other than vinylpyrrolidone, as a surface covering substance of silver nanowires is described, but the invention can be definitely applied to wires covered only with vinylpyrrolidone having been known, and those covered with a copolymer formed of pyrrolidone and an additional monomer.

In the case where the copolymer formed of pyrrolidone and an additional monomer is used as a covering agent, it is important that the structure of the copolymer has a structural unit of a hydrophilic monomer. The hydrophilic monomer referred herein means a monomer having such a property that 1 g or more the monomer is soluble in 1,000 g of water at 25°C. Examples of the monomer alternative to diallyldimethylammonium salt monomer include an acrylate or methacrylate monomer and a maleimide monomer. Examples of the acrylate or methacrylate monomer include ethyl acrylate, 2-hydroxyethyl acrylate, and 2-hydroxyethyl methacrylate. Examples of the maleimide monomer include 4-hydroxybutyl acrylate, N-methylmaleimide, N-ethylmaleimide, N-propylmaleimide, and N-tert-butylmaleimide. Silver nanowires that are covered with a copolymer of vinylpyrrolidone and one kind or two or more kinds of the aforementioned monomers are suitably used since the silver nanowires have good dispersion retainability in a liquid medium mainly containing water or an alcohol. The silver nanowires covered with the copolymer of this type are significantly effective, in combination with HEMC described later as an ink component, for resolving the bundle aggregation of the wires in coating with a die coater.

[Examples of Synthesis Method of Silver Nanowires]

While the silver nanowires used in the invention are not limited to those according to the synthesis method described in JP-A-2015-180772 and JP-A-2016-055283, the synthesis method is highly useful in the invention. The synthesis method will be briefly described below.

Such a method has been known that in an alcohol solvent having a silver compound dissolved therein, in the presence of a halogen compound and an organic protective agent, silver nanowires are obtained through reduction power of the alcohol as the solvent. In this case, it has been said that PVP is suitable as the organic protective agent for depositing metallic silver in a wire form. In the synthesis method of JP-A-2015-180772 described above, silver nanowires are formed by utilizing the reduction power of the alcohol solvent. In the synthesis method, however, reduction deposition of silver is performed under the condition where a chloride, a bromide, an aluminum salt, an alkali metal hydroxide, and an organic protective agent are dissolved in an alcohol solvent. At this time, the molar ratio Al/OH of the total Al amount of the aluminum salt dissolved in the solvent and the total hydroxide ion amount of the alkali metal hydroxide dissolved therein is from 0.01 to 0.40, and the molar ratio OH/Ag of the total hydroxide ion amount of the alkali metal hydroxide dissolved in the solvent and the total Ag amount of the silver compound dissolved therein is from 0.005 to 0.50.

The temperature, at which the reduction deposition reaction of silver is performed, may be set to a range of 60°C or more and the boiling point of the solvent or less. The boiling point herein is the boiling point under the pressure of the gas phase space in contact with the liquid surface of the solvent in the reaction vessel. In the case where plural kinds of alcohols are mixed and used as the solvent, the temperature may be the boiling point of the alcohol that has the lowest boiling point or less. From the standpoint of performing the reaction moderately, however, the temperature is preferably managed to a lower temperature for avoiding boiling. For example, in the case where ethylene glycol is used as the solvent, and the reaction is performed under the atmospheric pressure, the reaction is performed at a temperature of from 60 to 185°C, and more preferably from 65 to 175°C, while the boiling point of the ethylene glycol is approximately 197°C. The reaction time may be in a range of from 10 to 3,600 minutes.

As the specific procedures, it is desired that the substances except for the silver compound are dissolved in the alcohol solvent, and after the temperature of the solvent (which may be hereinafter referred to as a "solution A") reaches the prescribed reaction temperature, the silver compound is added to the solution A. The silver compound may be added in such a manner that the silver compound is dissolved in an alcohol solvent of the same kind as the aforementioned solvent in a separate vessel in advance, and the silver-containing liquid (which may be referred to as a "solution B") is mixed in the solution A. The solution B before adding to the solution A is preferably at a temperature around ordinary temperature (for example, from 15 to 40°C). In the case where the temperature of the solution B is too low, the dissolution of the silver compound may require a prolonged period of time, and in the case where the temperature is too high, the reduction reaction of silver tends to occur through the reduction power of the alcohol solvent in the solution B in the stage before mixing in the solution A. The silver compound that is readily soluble in the alcohol solvent, such as silver nitrate, may be added in the form of solid to the solution A. The silver compound may be added by a method of adding the total amount thereof at one time, or a method of adding intermittently or continuously over a certain period of time. The liquid is continuously agitated during the progress of reaction. The atmosphere of the gas phase in contact with the liquid surface of the solution A during the progress of reaction may be air or nitrogen.

After completing the deposition reaction of silver, the slurry containing silver nanowires is subjected to solid-liquid separation through such a measure as centrifugal separation or decantation, so as to recover the solid content. The decantation may be performed by allowing to stand for from 2 hours to 2 weeks for concentrating. Water may be added to the slurry after the reaction. The slurry has high viscosity, and thus the addition of water thereto increases the amount of the liquid but lowers the viscosity thereof to increase the sedimentation rate, resulting in decrease of the time required for concentrating. At least one kind of solvents having low polarity, such as acetone, toluene, hexane, kerosene, decalin, ethylbenzene, xylene, cyclopentane, cyclohexane, 1,4-dioxane, and amyl alcohol, may be added to the slurry to increase the sedimentation rate for concentrating. Furthermore, water may be added to decrease the viscosity. In the case where centrifugal separation is applied for decreasing the concentrating time, the slurry after the reaction may be directly subjected to a centrifugal separator for concentrating the silver nanowires. Furthermore, the concentrating time may be decreased by combining the addition of a solvent having low polarity and the addition of water for decreasing the viscosity.

After concentrating, the supernatant is removed. Thereafter, a solvent having high polarity, such as water and an alcohol, is added to redisperse the silver nanowire, and the solid content is again recovered by solid-liquid separation through such a measure as centrifugal separation or decantation. The process of redispersing and concentrating (i.e., washing) is preferably performed repeatedly. Nanoparticles and short wires can be removed by repeating the process of redispersing and concentrating.

It is also effective that fine particles and the like are separated and removed through crossflow filtration described in JP-A-2016-55283. Specifically, for example, it is effective that the crossflow filtration is performed by a circulation method, in which a liquid in a tank is circulated through a pump and a filter to the tank. In the crossflow filtration, wires having a larger length tend to remain in the circulated liquid, rather than being discharged as a filtrate through the tube wall of the ceramic filter. Wires having a large average length can be recovered by utilizing the filtering characteristics. In the crossflow filtration, accordingly, the liquid flowing and traveling in the tube is to be recovered, and only long and thin wires can be recovered as the remaining silver nanowires.

The solid content after washing mainly contains silver nanowires having the organic protective agent on the surface thereof. The silver nanowires can be stored in the form of a dispersion liquid obtained by dispersing in a suitable liquid medium corresponding to the purposes.

[Ink Formation]

The silver nanowire dispersion liquid obtained through the aforementioned process is prepared, and controlled to have the prescribed properties by mixing a viscosity modifier and a binder component therewith. At this time, in the invention, a urethane resin colloid or a urethane resin emulsion is mixed as the binder component. The preferred composition, properties, substances added, dispersion stability, and the like of the ink will be described below.

[Ink Composition]

In terms of mass proportion occupied in the total amount of the silver nanowire ink, the content of the silver nanowires is preferably from 0.01 to 2.0% by mass, the amount of the viscosity modifier added is preferably from 0.01 to 2.0% by mass, and the amount of the urethane resin added as the active ingredient is preferably from 0.005 to 2.0% by mass. The solvent is preferably water or a mixture of water and an alcohol, and in terms of mass proportion, the amount of the alcohol is preferably from 1 to 30% by mass with the balance of water. In the case where an alcohol is added as the solvent, the alcohol having polarity with a solubility parameter (SP value) of 10 or more is preferred. For example, a low boiling point alcohol, such as methanol, ethanol and isopropyl alcohol (2-propanol), can be preferably used. The SP value is 23.4 for water, 14.5 for methanol, 12.7 for ethanol, and 11.5 for isopropyl alcohol.

[Viscosity Modifier]

The viscosity modifier used in the invention is necessarily soluble in water or a mixed solvent of water and an alcohol as the solvent. Various water-soluble polymers having been used as a thickener in various fields can be used. Examples thereof as a natural material and a derivative thereof include a cellulose material and a derivative thereof, such as HPMC (hydroxypropylmethylcellulose), HEMC (hydroxyethylmethylcellulose), and CMC (carboxymethylcellulose), and MC (methylcellulose), and a protein material, such as albumin (a component of egg white) and casein (contained in milk). In addition, alginic acid, agar, starch, polysaccharides, and the like may also be used as the water soluble thickener. Examples thereof as a synthetic material include polymers, such as a vinyl compound, a polyester compound, a polyvinyl alcohol compound, and a polyalkylene oxide compound.

[Binder]

In a transparent conductive coated film obtained by coating and drying a silver nanowire ink on a substrate, the adhesiveness among the respective silver nanowires and the adhesiveness between the silver nanowires and the substrate largely influence the yield in the production of a transparent conductive film substrate and thus are extremely important. For ensuring the adhesiveness, it is necessary to add a binder component functioning as "glue". In the description herein, a transparent coated film that is obtained by coating and drying a silver nanowire ink on a substrate, and is in a state exhibiting conductivity is referred to as a transparent conductive coated film.

The conductivity of a transparent conductive film substrate (i.e., a joined structure of a substrate in a film form and the transparent conductive coated film on the surface thereof) is exhibited through contact of the silver nanowires constituting the transparent conductive coated film. The binder component added may cause a possibility that the contact of metal of the wires is inhibited thereby to fail to achieve sufficient conduction. Accordingly, such a measures have been frequently employed that a silver nanowire ink that does not contain a strong binder component is coated and dried to achieve a secure contact state of the wires, and then an overcoating agent containing an adhesive component is coated to ensure the adhesiveness of the transparent conductive coated film.

However, even in the method of overcoating, the film substrate immediately after being coated with silver nanowire ink generally passes repeatedly through the rolls for changing in direction in the furnace, so as to ensure the drying time. The substrate is bent at the position where the substrate passes through the roll in the processing line, and the coated film thus receives stress, which may cause deterioration of the conductivity achieved through contact of wires. For maintaining the good conductivity, it is difficult to perform the operation with an increased processing line speed, and the productivity is difficult to improve. Furthermore, such a procedure is frequently employed that the substrate is once wound up into a coil before sending to the next step, and then wound off in the subsequent overcoating step. Also in this case, the surface of the coated film receives stress in winding-up and winding-off, which may cause the decrease in conductivity and the release-off from the substrate. Therefore, even in the case where the overcoating is performed, it is necessary for enhancing the productivity that a certain kind of a binder component is mixed in the silver nanowire ink, so as to enhance the adhesiveness among the silver nanowires and the adhesiveness between the silver nanowires and the substrate. In the following description, the "adhesiveness" means both the adhesiveness among the silver nanowires and the adhesiveness between the silver nanowires and the substrate, unless otherwise indicated.

The binder added to the silver nanowire ink is required to be excellent in conductivity, optical characteristics (e.g., a high light transmissivity and a small haze), and adhesiveness. However, it is difficult to achieve the requirements at high levels. The binder is basically an adhesive, and therefore the binder that is improperly selected may intervene in the contact point of the silver nanowires and may largely deteriorate the conductivity. Furthermore, due to the presence of the adhesive, there is a problem that the silver nanowires are attached to each other in the ink to facilitate aggregation thereof.

As a result of the detailed investigations by the present inventors, it has been found that a significant effect can be obtained by mixing a urethane resin colloid or a urethane resin emulsion in the silver nanowire dispersion liquid. In particular, the urethane resin may have a degree of elongation of less than 500% (for example, 2% or more and less than 500%). The degree of elongation (which may be shown as "elongation" or "breaking elongation" depending on the disclosed data) is described in JIS described above. In general, products of a urethane resin colloid or a urethane resin emulsion are attached with a value of the degree of elongation provided by the manufacturer. The use of the product having the value of the degree of elongation (which may be the elongation or the breaking elongation) of less than 500%, more preferably 400% or less, and further preferably 300% or less, is preferred since aggregate clusters (i.e., particles) of the wires can be suppressed from being formed in agitation for a prolonged period of time, resulting in the ink excellent in stability. A urethane resin having a small degree of elongation is generally a "hard" urethane resin, and the present inventors have found that a hard resin is preferred in the purpose of the invention.

The urethane resin particles to be added have an average particle diameter of 200 nm or less. The average particle diameter is more preferably 10 nm or more and 100 nm or less, and further preferably 10 nm or more and 50 nm or less. The average particle diameter employed herein is a value of an arithmetic average diameter on volume basis (i.e., a volume average diameter MV). The volume average diameter MV can be obtained by measuring the particle size distribution, for example, by using a commercially available particle size distribution measuring equipment (such as Nanotrac (registered trade name) available from Microtrac BEL Corporation). The case where the particle diameter of the urethane resin binder added exceeds 200 nm is improper since the coated film of the silver nanowire has a high haze due to the high haze of the binder itself.

As for the structure thereof, a so-called "hard" urethane resin is preferred, and the 100% modulus as an index thereof is preferably 6.0 MPa or more, and more preferably 8.0 MPa or more and 30 MPa or less, in terms of average value. A urethane resin that is as hard as having an unmeasurable 100% modulus is also preferred. The 100% modulus is a value of stress that is necessary for elongating the resin by 100%. A resin having an unmeasurable 100% modulus is a "hard and brittle" resin having a small elongation with a (breaking) degree of elongation of 100% or less. A resin of this type is also suitable for the purpose of the invention. The "average" modulus herein means a single value in the case where only the single value is obtained, and means an average value in the case where values with a certain range are obtained, as described above. A high value therefor is preferred since aggregate clusters (i.e., particles) are suppressed from being formed in agitation after the formation of the ink, resulting in the ink suitable for coating. The value that is less than 6.0 MPa is not suitable since particles may be formed in a large amount in agitation for a prolonged period of time. The 100% modulus is defined in JIS described above. In general, products of a urethane resin colloid or a urethane resin emulsion are attached with a value of the 100% modulus provided by the manufacturer.

The urethane resin colloid or the urethane resin emulsion to be added may have a pH of 10.0 or less, and preferably 9.5 or less. The case where the pH of the urethane resin colloid or the urethane resin emulsion to be added is to high is not preferred since a rapid increase of pH value may be locally observed, which may trigger aggregation of the wires.

The urethane resin colloid or the urethane resin emulsion to be added is preferably nonionic or anionic, and particularly preferably anionic. In the case where a cationic material is added, there may be cases where the colloid or emulsion is adsorbed on the surface of the nanowires to fail to exhibit the effect. The anionic material is suitable since it shows a negative surface potential, which is the same as the nanowires in the liquid, and thus may not be adsorbed on the nanowires but directly exhibits the effect of the addition thereof.

Furthermore, it has been found that a self-emulsifying urethane resin colloid or urethane resin emulsion is preferred as the urethane resin colloid or the urethane resin emulsion to be added. A forcedly emulsifying urethane resin colloid or urethane resin emulsion contains a surfactant. In the case where a forcedly emulsifying urethane resin is used, the surfactant is firmly adsorbed on the surface of the wires to deteriorate the contact resistance of the wires in the production of the coated film, and the coated film having good characteristics may not be obtained. Furthermore, the forcedly emulsifying urethane resin has a large particle diameter of the resin, which increases the haze of the resin itself in forming the coated film, and the coated film having good characteristics may not be obtained. The self-emulsifying urethane resin has a hydrophilic group introduced to the urethane skeleton, and the self-emulsifying resin capable of being dispersed in a solvent without the addition of a surfactant can enhance the capability of the coated film, such as the transparency and the water resistance, due to the absence of a surfactant. Furthermore, the self-emulsifying urethane resin is preferred since the particle diameter of the urethane particles can be decreased, by which it is considered that the characteristics of the coated film can be enhanced.

Examples of the kind of the urethane resin include those having, in the structure of the resin, such a skeleton as acrylic-modified polyester, polycarbonate-polyether, polyether, polycarbonate, polyester, and polyester-polyether.

According to the studies by the inventors, it has been found that the urethane resin having the aforementioned structure functions as a binder without impairing the dispersibility of the wires, and is significantly effective for forming a transparent conductive coated film excellent in conductivity, optical capability, and adhesiveness. Examples of the urethane resin colloid or the urethane resin emulsion include Superflex (available from DKS Co., Ltd.), Resamine (available from Dainichiseika Color & Chemicals Mfg. Co., Ltd.), NeoRez and NeoPac (available from Kusumoto Chemicals, Ltd.), Evafanol and Neostecker (available from Nicca Chemical Co., Ltd.), and Adeka Bontighter (available from Adeka Corporation). The amount thereof added to the ink is preferably in a range of from 0.005 to 2.0% by mass in terms of the urethane resin as the active ingredient based on the total amount of the ink.

It has been found that the urethane resin having a polycarbonate skeleton among these is significantly effective for enhancing the light durability of the transparent conductive film containing silver nanowires as a conductive filler. Accordingly, in the case where the light durability is to be particularly enhanced, the binder containing the urethane resin having a polycarbonate skeleton as a mixed component is preferably used.

[Organic Protective Agent]

For enhancing the dispersion stability of the silver nanowires in the liquid, an organic protective agent used in synthesis of silver nanowires may be added depending on necessity. Examples of the water-soluble polymer include PVP (polyvinylpyrrolidone), and a copolymer of vinylpyrrolidone and an additional monomer, and the like are also effective. In the case where the organic protective agent is added, it is more effective that the water-soluble organic protective agent having a molecular weight of 10,000 or more is added in an amount of from 0.01 to 1.0% by mass based on the total amount of the ink. The organic protective agent of this type has a large molecular weight and low activity, and thus does not function as a surfactant. The organic protective agent shows only weak absorbability to the surface of silver and thus is readily released from the surface of silver under weak heating for drying, so as not to inhibit the contact of silver.

[Dimension and Shape of Silver Nanowires]

The silver nanowires preferably have a shape that is thin and long as much as possible from the standpoint of forming the transparent conductive coated film excellent in conductivity and visibility. For example, it is desired that the average diameter is 50 nm or less, and the average length is 10 $\mu$m or more. The silver nanowires having an average diameter of 30 nm or less and an average length of 10 $\mu$m or more are more preferably used. The average aspect ratio thereof is preferably 250 or more, and more preferably 450 or more. The average length can be increased by removing short wires through a purification operation. However, the average diameter is substantially determined by whether or not thin wires can be stably synthesized through the reduction deposition reaction. Therefore, it is considerably difficult to control the average diameter afterward, but thin wires are necessarily synthesized. The use of the aforementioned copolymer composition as the organic protective agent enables reduction deposition of extremely thin silver nanowires. The average length, the average diameter, and the average aspect ratio herein are in accordance with the following definitions.

[Average Length]

On a micrograph (such as an FE-SEM micrograph), the trace length from one end to the other end of one silver nanowire is designated as the length of the wire. The value obtained by averaging the lengths of the respective silver nanowires present on the micrograph is designated as the average length. For calculating the average length, the total number of the wires to be measured is 100 or more. A wire-like product having a length of less than 1.0 $\mu$m and a particle-like product having a ratio (which is referred to as an "axial ratio") of the length of the longest portion (which is referred to as a "long diameter") to the length of the longest portion in the direction perpendicular to the long diameter (which is referred to as a "short diameter") of less than 5.0 are excluded from the measurement object.

[Average Diameter]

On a micrograph (such as an FE-SEM micrograph), the average width between the contours on both sides in the thickness direction of one silver nanowire is designated as the diameter of the wire. The value obtained by averaging the diameters of the respective silver nanowires present on the micrograph is designated as the average diameter. For calculating the average diameter, the total number of the wires to be measured is 100 or more. A wire-like product having a length of less than 1.0 $\mu$m and a particle-like product having an axial ratio of less than 5.0 are excluded from the measurement object.

[Average Aspect Ratio]

The average aspect ratio is calculated by substituting the average diameter and the average length for the following expression (1).

$$(\text{average aspect ratio}) = (\text{average length (nm)}) / (\text{average diameter (nm)}) \qquad (1)$$

[Viscosity and Surface Tension]

The silver nanowire ink preferably has a viscosity of from 1 to 100 mPa·s, and more preferably from 1 to 50 mPa·s, measured by a rotary viscometer at a shear rate of 300 (1/s), and a surface tension of from 20 to 80 mN/m, and more preferably from 30 to 80 mN/m, for providing excellent coating capability.

The viscosity may be measured, for example, with a rotation viscometer (HAAKE RheoStress 600, produced by Thermo Scientific, Inc., measurement cone: Cone C60/1° Ti, D = 60 mm, plate: Meas. Plate cover MPC60).

The surface tension may be measured with a full-automatic surface tension meter (for example, a full-automatic surface tension meter, CBVP-Z, produced by Kyowa Interface Science Co., Ltd.).

[Method for producing Silver Nanowire Ink]

The silver nanowire ink according to the invention can be produced in the following manner.

Silver nanowires covered with a polyvinylpyrrolidone or a known copolymer of polyvinylpyrrolidone and a hydrophilic monomer are prepared by using the method exemplified above or a known method.

The silver nanowires are dispersed in a liquid medium to provide a dispersion liquid of silver nanowires for performing ink formation. The liquid medium used may be appropriately selected, for example, from a water solvent, an alcohol solvent, and a mixed solvent of water and an alcohol, for the solvent substance for forming the target ink.

The viscosity modifier and the binder component are added to provide a silver nanowire ink. The ink may be produced by adding the viscosity modifier and the binder component. The amount of the viscosity modifier added may be controlled to provide the target viscosity. Examples of the viscosity modifier used include HPMC (hydroxypropylmethylcellulose), HEMC (hydroxyethylmethylcellulose), and CMC (carboxymethylcellulose), and MC (methylcellulose), and the aforementioned substances may also be used. The viscosity modifier may be prepared in advance as an aqueous solution, which may be mixed in the silver nanowire dispersion liquid.

The binder component added may be the aqueous urethane resin colloid or urethane resin emulsion as described above. Among these, the self-emulsifying urethane resin colloid or urethane resin emulsion is suitable since the aforementioned effects can be obtained. The silver nanowire ink can be obtained through the aforementioned process.

[Production of Transparent Conductor]

The silver nanowire ink according to the invention may be coated on the surface of the substrate by a known method, such as a roll coater method. Thereafter, the coated film may be dried to provide a transparent conductive coated film having good adhesiveness. The coated film may be dried in air at a temperature of from 80 to 150°C for approximately from 3 seconds to 3 minutes.

Examples

<Example 1>

[Synthesis of Silver Nanowires]

At ordinary temperature, 0.484 g of lithium chloride, 0.1037 g of potassium bromide, 0.426 g of lithium hydroxide, 4.994 g of a propylene glycol solution having a content of aluminum nitrate nonahydrate of 20% by mass, and 83.875 g of a copolymer of vinylpyrrolidone and diallyldimethylammonium nitrate were added and dissolved in 7,800 g of propylene glycol to provide a solution A. In a separate vessel, 67.96 g of silver nitrate was added to 320 g of propylene glycol and dissolved therein by agitating at room temperature, so as to provide a solution B containing silver.

The solution A was placed in a reaction vessel, and heated from ordinary temperature to 90°C under agitation, and then the total amount of the solution B was added to the solution A over 1 minute. After completing the addition of the solution B, the reaction liquid was retained at 90°C for 24 hours while retaining the agitation state. Thereafter, the reaction liquid was cooled to ordinary temperature to provide silver nanowires.

[Washing]

1 L of the reaction liquid (i.e., the liquid containing the synthesized silver nanowires) cooled to ordinary temperature was collected, and transferred to a PFA bottle having a capacity of 35 L. Thereafter, 20 kg of acetone was added thereto, followed by agitating for 15 minutes, and then the mixture was allowed to stand for 24 hours, thereby performing spontaneous sedimentation of the concentrate. Thereafter, the supernatant was removed, and only the concentrate was recovered. To the recovered concentrate, 20 g of a 1% by mass PVP aqueous solution was added, followed by agitating for 3 hours, so as to redisperse the silver nanowires. After the agitation, 2 kg of acetone was added, and the mixture was agitated for 10 minutes and then allowed to stand, so as to perform spontaneous sedimentation of the concentrate. The supernatant was again removed, and the concentrate was recovered. To the resulting concentrate, 160 g of pure water was added to redisperse the silver nanowires. To the silver nanowire dispersion liquid after the redispersion, 2 kg of acetone was added, and after agitating for 30 minutes, the dispersion liquid was allowed to stand to perform spontaneous sedimentation of the concentrate. The supernatant was thrice removed, and the concentrate was recovered. To the resulting concentrate, 320 g of a 0.5% by mass PVP aqueous solution was added, followed by agitating for 12 hours, so as to provide a silver nanowire dispersion liquid.

[Crossflow Filtration]

The silver nanowire dispersion liquid obtained through the washing step was diluted with pure water to provide a silver nanowire dispersion liquid having a silver nanowire concentration of 0.07% by mass, which was subjected to crossflow filtration using a porous ceramic filter tube. The ceramic filter used herein had an average pore diameter of 5.9 $\mu$m.

Specifically, by setting the liquid amount of the entire circulation system including the silver nanowire dispersion liquid to 52 L, and the flow rate of the liquid to 150 L/min, the liquid was circulated for 12 hours while replenishing pure water in an amount equivalent to the amount of the liquid discharged as the filtrate. Thereafter, the crossflow filtration was continued for 12 hours in a state where the replenishment of pure water was terminated, and thereby the silver nanowire dispersion liquid was concentrated by utilizing the phenomenon that the filtrate was discharged to decrease the liquid amount gradually.

A small amount of a specimen was collected from the silver nanowire dispersion liquid after the crossflow filtration, and after evaporating water as the dispersion medium on an observation table, observed with FE-SEM (high resolution field emission scanning electron microscope), and as a result, the silver nanowires had an average length of 18.0 $\mu$m, an average diameter of 26.5 nm, and an average aspect ratio of $18,000/26.5 \approx 679$.

The measurement of the diameter was performed with SEM micrographs taken in an ultra-high resolution mode, at a focal length of 7 mm, an acceleration voltage of 20 kV, and a magnification of 150,000, and the measurement of the length was performed with SEM micrographs taken in a normal mode, at a focal length of 12 mm, an acceleration voltage of 3 kV, and a magnification of 2,500, by using a high resolution FE-SEM (field emission scanning electron microscope, S-4700, produced by Hitachi, Ltd.) (the same as in the following examples).

[Ink Formation]

HPMC (hydroxypropylmethylcellulose, produced by Shin-Etsu Chemical Co., Ltd.) was prepared as a viscosity modifier. The powder of HPMC was placed in a hot water under strongly agitating with an agitator, and then the solution was spontaneously cooled to 40°C under the strong agitation continued, and then forcibly cooled to 10°C or less with a chiller. The liquid after the agitation was filtered with a metal mesh having an aperture of 100 μm to remove gelled insoluble matters, thereby providing an aqueous solution containing HPMC dissolved therein.

2-Propanol (isopropanol) was prepared as an alcohol to be added for providing a mixed solvent of water and an alcohol.

Neostecker 1200, produced by Nicca Chemical Co., Ltd., was prepared as a urethane resin. The properties thereof are shown in Table 1. The average particle diameter of the urethane resin particles was obtained in the following manner.

A specimen controlled with pure water to have a binder concentration (solid concentration, active ingredient concentration) of 0.1% by mass was measured with a particle size distribution measuring equipment, Nanotrac Wave EX-150, produced by Microtrac BEL Corporation. The time condition was a set-zero time (background correction time) of 30 seconds and a measurement time of 120 seconds with a measurement number of times of 1. The conditions of the particles necessary for the measurement were a refractive index of 1.5, a density of 1.0 g/cm³, water as a solvent, transmission as a transmissibility, and non-spherical as a shape, and the conditions of the solvent necessary therefor were a refractive index of 1.333, a viscosity at 20°C of 1.002 mPa·s, and a viscosity at 30°C of 0.797 mPa·s. An arithmetic average particle diameter on volume basis (i.e., a volume average diameter MV) was obtained from the resulting particle size distribution, and designated as the average particle diameter.

1.2 g of the silver nanowire dispersion liquid (containing water as the solvent) obtained through the aforementioned crossflow filtration, 2.1 g of pure water, 0.2 g of the HPMC aqueous solution, 0.4 g of 2-propanol, and 0.1 g of the urethane resin were placed sequentially in one vessel having a lid, and agitated and mixed in such a manner that in every time that the substance was placed in the silver nanowire dispersion liquid, the lid was closed, and then the vessel was vertically shaken 100 times, so as to provide a silver nanowire ink. The contents of the substances in the ink (i.e., the ink composition) in terms of percentage by mass were 10.0% for 2-propanol, 0.10% for silver, 0.088% for the viscosity modifier (HPMC), and 0.067% for the binder component (urethane resin), with the balance of water. The organic protective agent is attached to the surface of the silver nanowires, but the content of the organic protective agent in the ink is extremely smaller than the aforementioned components and thus can be ignored in the ink composition. The content of the binder component and the kind of the viscosity modifier in the ink are shown in Table 2 (the same as in the following examples).

A liquid specimen was collected from the silver nanowire ink obtained above and diluted with a mixed liquid of 90.0% of pure water and 10.0% of 2-propanol, so as to control the silver concentration to 0.001%, all in terms percentage by mass. 10 mL of the diluted silver nanowire ink was measured for the number of particles in the liquid with a liquid-borne particle coulter, KS-42D, produced by Rion Co., Ltd. A specimen exhibiting an increment rate of the number of particles of 2 μm or more as compared to an ink having no binder added thereto of less than 40% was evaluated as A (excellent), a specimen exhibiting an increment rate in a range of from 40 to 100% was evaluated as B (fair), and a specimen exhibiting an increment rate of 100% or more was evaluated as C (poor). The evaluation results are shown in Table 1.


[Silver Nanowire Conductive Film]


A PET film substrate (Cosmoshine (trade name) A4100, produced by Toyobo Co., Ltd.) having a thickness of 100 μm and a dimension of 50 mm × 150 mm was prepared. The silver nanowire ink was coated on the bare surface of the PET film substrate with a bar coater with a spiral wire No. 6 to 14, so as to provide coated films having various thicknesses. The coated films were dried at 120°C in air for 1 minute. The dried coated films were measured for the sheet resistance with Loresta GP MCP-T610, produced by Mitsubishi Chemical Analytech Co., Ltd. The dried coated films were measured for the total light transmittance with Hazemeter NDH 5000, produced by Nippon Denshoku Industries Co., Ltd. For avoiding the influence of the PET substrate from the values of the total light transmittance and the haze, the value obtained by (total light transmittance including substrate) + (100% - (transmittance of only substrate)) was used for the total light transmittance, and the value obtained by (haze including substrate) - (haze of only substrate) was used for the haze. The haze value at 50 Ω/sq was estimated from the logarithmic approximate expression (y = a×ln(x)+b, wherein y represents the haze value (%), and x represents the sheet resistance (Ω/sq) obtained from the logarithmic approximate curve obtained from the resulting sheet resistance-haze plot. The haze value at 50 Ω/sq with no binder added was estimated in the similar manner with extrapolation. In the comparison between the haze values, a specimen exhibiting an increment rate of the haze value from the case with no binder added to the case with the binder added of less than 25% was evaluated as A (excellent), a specimen exhibiting an increment rate in a range of from 25 to 50% was evaluated as B (fair), and a specimen exhibiting an increment rate of 50% or more was evaluated as C (poor). The evaluation results are shown in Table 2.

<Examples 2 to 14 and Comparative Examples 1 to 9>

Silver nanowire inks and conductive films obtained therewith were evaluated in the same manner as in Example 1 except that the urethane resins shown in Table 1 were used, and the silver nanowire inks were produced with the amounts of the urethane resin added shown in Table 2. In Table 1, the example described with "unmeasurable" for the 100% Mo value is a "hard and brittle" resin having a small elongation with a breaking degree of elongation of 100% or less. The results obtained are shown in Tables 1 and 2.

Table 1

| Example No. | Binder component | | | | | | | Average particle diameter (measured MV) (nm) | Degree of elongation (%) | 100%Mo (MPa) |
|---|---|---|---|---|---|---|---|---|---|---|
| | Product name | Product number | Manufacturer | Kind of component | Type | pH | Ionicity | | | |
| Example 1 | Neostecker | 1200 | Nicca chemical | acrylic-modified polyester | self-emulsifying | 7.0 | anionic | 38.0 | 430 | 12 |
| Example 2 | Resamine | D-4090 | Dainichiseika | polycarbonate-polyether | self-emulsifying | 7.5 | anionic | 33.0 | 420 | 9 |
| Example 3 | Evafanol | HA-170 | Nicca Chemical | polycarbonate | self-emulsifying | 7.0 | anionic | 40.0 | 340 | 14 |
| Example 4 | Adeka Bontighter | HUX-350 | ADEKA | polyether | self-emulsifying | 8.0 | anionic | 23.3 | 310 | 25 |
| Example 5 | Superflex | 420 | DKS | polycarbonate | self-emulsifying | 7.5 | anionic | 47.1 | 290 | 17 |
| Example 6 | Resamine | D-6335NP | Dainichiseika | polycarbonate | self-emulsifying | 7.5 | anionic | 41.0 | 270 | 25 |
| Example 7 | Adeka Bontighter | HUX-370 | ADEKA | polyester | self-emulsifying | 8.0 | anionic | 21.0 | 200 | 25 |
| Example 8 | Superflex | 170 | DKS | polyester-polyether | self-emulsifying | 7.5 | anionic | 28.0 | 50 | unmeasurable |
| Example 9 | Superflex | 130 | DKS | polyether | self-emulsifying | 7.5 | anionic | 38.5 | 6 | unmeasurable |
| Example 10 | Superflex | 210 | DKS | polyester | self-emulsifying | 7.0 | anionic | 44.1 | 5 | unmeasurable |
| Example 11 | Superflex | 820 | DKS | polyester | self-emulsifying | 7.5 | anionic | 35.0 | 5 | unmeasurable |
| Comparative Example 1 | Evafanol | HA-107C | Nicca Chemical | polycarbonate | self-emulsifying | 7.5 | anionic | 138.0 | 1200 | 2 |
| Comparative Example 2 | Superflex | 500M | DKS | polyester | self-emulsifying | 7.0 | nonionic | 129.0 | 1100 | 6 |

(continued)

| Example No. | Binder component | | | | | | | | | | |
|---|---|---|---|---|---|---|---|---|---|---|---|
| | Product name | Product number | Manufacturer | Kind of component | Type | pH | Ionicity | Average particle diameter (measured MV) (nm) | Degree of elongation (%) | 100%Mo (MPa) | |
| Comparative Example 3 | Adeka Bontighter | HUX-282 | ADEKA | polyether | forcedly emulsifying | 8.0 | anionic | 280.1 | 1100 | 2 | |
| Comparative Example 4 | Neostecker | 400 | Nicca Chemical | acrylic-modified polyester | self-emulsifying | 7.5 | anionic | 45.1 | 640 | 4 | |
| Comparative Example 5 | Adeka Bontighter | HUX-561S | ADEKA | polycarbonate | self-emulsifying | 8.0 | anionic | 114.8 | 620 | 5 | |
| Comparative Example 6 | Adeka Bontighter | HUX-564 | ADEKA | polycarbonate | self-emulsifying | 8.0 | anionic | 114.6 | 620 | 5 | |
| Comparative Example 7 | Resamine | D-6031 | Dainichiseika | polycarbonate | self-emulsifying | 7.5 | anionic | 46.8 | 550 | 3 | |
| Comparative Example 8 | Permarin | UA-368 | Sanyo chemical | polycarbonate | self-emulsifying | 9.5 | anionic | 247.3 | 420 | 3 | |
| Comparative Example 9 | Resamine | D-1063 | Dainichiseika | polycarbonate-polyester | self-emulsifying | 8.0 | anionic | 115.1 | 400 | 3 | |
| Example 12 | Resamine | D-6335NP | Dainichiseika | polycarbonate | self-emulsifying | 7.5 | anionic | 41.0 | 270 | 25 | |
| Example 13 | Resamine | D-6335NP | Dainichiseika | polycarbonate | self-emulsifying | 7.5 | anionic | 41.0 | 270 | 25 | |
| Example 14 | ETERNACOLL | UW-5002 | Ube Industries | polycarbonate | self-emulsifying | 9.0 | anionic | 32.6 | 100 | unmeasurable | |

[Table 2]

| Example No. | Binder component | | | Ink | | | | Conductive film | | | |
| | Product name | Kind of component | Content of binder component(% by mass) | Viscosity modifier | Number of particles | | Haze (50 Ω/sq) | | | | Transmittance (50 Ω/sq) |
| | | | | | Increment rate (%) | Evaluation | Absolute value (%) | Increment rate (%) | Evaluation | | Absolute value (%) |
|---|---|---|---|---|---|---|---|---|---|---|---|
| Example 1 | Neostecker | acrylic-modified polyester | 0.067 | HPMC | 1.5 | A | 0.65 | 22.2 | A | | 99.8 |
| Example 2 | Resamine | polycarbonate-polyether | 0.067 | HPMC | 41.3 | B | 0.65 | 22.3 | A | | 99.7 |
| Example 3 | Evafanol | polycarbonate | 0.067 | HPMC | 4.6 | A | 0.65 | 23.3 | A | | 99.7 |
| Example 4 | Adeka Bontighter | polyether | 0.067 | HPMC | 13.6 | A | 0.72 | 35.6 | B | | 99.8 |
| Example 5 | Superflex | polycarbonate | 0.067 | HPMC | 6.1 | A | 0.69 | 30.0 | B | | 99.7 |
| Example 6 | Resamine | polycarbonate | 0.067 | HPMC | 19.3 | A | 0.70 | 32.4 | B | | 99.7 |
| Example 7 | Adeka Bontighter | polyester | 0.067 | HPMC | -1.2 | A | 0.70 | 32.2 | B | | 99.7 |
| Example 8 | Superflex | polyester-polyether | 0.067 | HPMC | -6.0 | A | 0.61 | 16.0 | A | | 99.7 |
| Example 9 | Superflex | polyether | 0.067 | HPMC | -15.3 | A | 0.67 | 25.8 | B | | 99.6 |
| Example 10 | Superflex | polyester | 0.067 | HPMC | 27.4 | A | 0.66 | 24.2 | A | | 99.7 |
| Example 11 | Superflex | polyester | 0.067 | HPMC | -4.0 | A | 0.69 | 30.6 | B | | 99.7 |
| Comparative Example 1 | Evafanol | polycarbonate | 0.067 | HPMC | -1.2 | A | 0.92 | 74.4 | C | | 99.8 |
| Comparative Example 2 | Superflex | polyester | 0.067 | HPMC | 15.9 | A | 1.81 | 241.8 | C | | 99.7 |
| Comparative Example 3 | Adeka Bontighter | polyether | 0.067 | HPMC | 77.3 | B | 3.38 | 536.9 | C | | 99.7 |
| Comparative Example 4 | Neostecker | acrylic-modified polyester | 0.067 | HPMC | 127.7 | C | 0.81 | 53.0 | C | | 99.8 |

EP 3 594 298 A1

15

(continued)

| Example No. | Binder component | | | Ink | | | Conductive film | | | |
| | Product name | Kind of component | Content of binder component(% by mass) | Viscosity modifier | Number of particles | | Haze (50 Ω/sq) | | | Transmittance (50 Ω/sq) |
| | | | | | Increment rate (%) | Evaluation | Absolute value (%) | Increment rate (%) | Evaluation | Absolute value (%) |
|---|---|---|---|---|---|---|---|---|---|---|
| Comparative Example 5 | Adeka Bontighter | polycarbonate | 0.067 | HPMC | 145.0 | C | 0.90 | 69.4 | C | 99.8 |
| Comparative Example 6 | Adeka Bontighter | polycarbonate | 0.067 | HPMC | 66.4 | B | 1.03 | 94.0 | C | 99.8 |
| Comparative Example 7 | Resamine | polycarbonate | 0.067 | HPMC | 558.7 | C | 1.00 | 89.6 | C | 99.6 |
| Comparative Example 8 | Permarin | polycarbonate | 0.067 | HPMC | 110.4 | C | 2.54 | 379.6 | C | 99.6 |
| Comparative Example 9 | Resamine | polycarbonate-polyester | 0.067 | HPMC | 197.8 | C | 0.84 | 58.9 | C | 99.7 |
| Example 12 | Resamine | polycarbonate | 0.084 | HPMC | 19.5 | A | 0.73 | 33.5 | B | 99.8 |
| Example 13 | Resamine | polycarbonate | 0.100 | HPMC | 19.6 | A | 0.74 | 35.1 | B | 99.8 |
| Example 14 | ETERNACOLL | polycarbonate | 0.100 | HPMC | -10.2 | A | 0.70 | 28.1 | A | 99.7 |

<Evaluation of Light Durability>

The silver nanowire inks of the examples shown in Table 3 were prepared. Reference Examples 1 to 3 are examples of the production of a silver nanowire ink using the urethane resins of Examples 8 to 10 (see Table 1) respectively in an amounts shown in Table 3. Reference Example 4 is an example of the production of a silver nanowire ink in the same manner as in Example 1 except that no binder is added. Silver nanowire conductive films were formed by using the silver nanowire inks of the examples in the same manner as in Example 1, and the silver nanowire conductive films were irradiated with light from a xenon lamp with a light resistance tester (Tabletop Xenon Light Resistant Tester, Atlas Suntest XLS+, available from Toyo Seiki Seisaku-sho, Ltd.). The test conditions were a black panel temperature of 60°C, an irradiation intensity of 550 W/m$^2$ (integrated value of spectral radiant intensity of wavelength of from 300 to 800 nm), and an irradiation time of 250 hours. The change rate of sheet resistance $A_{250}$ (%) defined by the following expression (2) was obtained from the measured values of the sheet resistance before the light irradiation test and after the test. The sheet resistance (surface resistance) of the silver nanowire conductive film was measured from the surface of the PET film substrate opposite to the surface having the silver nanowire conductive film formed thereon, with an eddy current resistivity measuring device (EC-80P, produced by Napson Corporation).

$$A_{250} = (R_{250} - R_{INIT})/R_{INIT} \times 100 \qquad (2)$$

wherein $R_{INIT}$ represents the sheet resistance ($\Omega$/sq) before the light irradiation test, and $R_{250}$ represents the sheet resistance ($\Omega$/sq) immediately after the light irradiation test for 250 hours. The results are shown in Table 3.

Table 3

| Example No. | Binder component | | | | Ink | Conductive film |
|---|---|---|---|---|---|---|
| | Product name | Product number | Manufacturer | Kind of component | Content of binder component (% by mass) | Change rate of sheet resistance $A_{250}$ (%) |
| Example 6 | Resamine | D-6335NP | Dainichiseika | polycarbonate | 0.067 | -4.7 |
| Example 12 | Resamine | D-6335NP | Dainichiseika | polycarbonate | 0.084 | -32.5 |
| Example 13 | Resamine | D-6335NP | Dainichiseika | polycarbonate | 0.100 | -32.2 |
| Example 14 | ETERNACOLL | UW-5002 | Ube Industries | polycarbonate | 0.100 | -17.2 |
| Reference Example 1 | Superflex | 170 | DKS | polyester-polyether | 0.100 | 3.2 |
| Reference Example 2 | Superflex | 130 | DKS | polyether | 0.100 | 5.1 |
| Reference Example 3 | Superflex | 210 | DKS | polyester | 0.100 | 2.3 |
| Reference Example 4 | - | - | - | - | 0 | 3.9 |

The silver nanowire inks having the binder component constituted by the urethane resin having a polycarbonate skeleton mixed therein each exhibited a negative value for the change rate of sheet resistance $A_{250}$ showing the tendency that the conductivity was rather increased after the light irradiation. Although the mechanism thereof is unclear at present, it is apparent that the contact among the silver nanowires forming the conductive network in the transparent coated film is firmly maintained even after the light irradiation. There may be a possibility that due to the light irradiation, the urethane resin having a polycarbonate skeleton performs a certain action on the coated film component and the organic protective agent covering the surface of the silver nanowires, and achieves the decrease of the contact resistance of the wires. It can be said in any case that the urethane resin having a polycarbonate skeleton is useful for improving the light durability of a conductive film using silver nanowires, as compared to the other urethane resins.

**Claims**

1. A method for producing a silver nanowire ink, comprising mixing urethane resin particles having an average particle diameter of 200 nm or less, containing a urethane resin having a degree of elongation of less than 500%, with a silver nanowire dispersion liquid.

2. The method for producing a silver nanowire ink according to claim 1, wherein the urethane resin has an average value of 100% modulus (100% Mo) of 6.0 MPa or more.

3. The method for producing a silver nanowire ink according to claim 1, wherein the silver nanowire ink has a content of the urethane resin of from 0.005 to 2.0% by mass based on the total amount of the silver nanowire ink.

4. The method for producing a silver nanowire ink according to claim 1, wherein the silver nanowire ink has a content of silver of from 0.01 to 2.0% by mass based on the total amount of the silver nanowire ink.

5. The method for producing a silver nanowire ink according to claim 1, wherein the urethane resin contains a hydrophilic group in a urethane structure thereof.

6. The method for producing a silver nanowire ink according to claim 1, wherein the urethane resin has a polycarbonate skeleton.

7. The method for producing a silver nanowire ink according to claim 1, wherein the silver nanowires dispersed in the liquid have an average diameter of 50 nm or less and an average length of 10 $\mu$m or more.

8. The method for producing a silver nanowire ink according to claim 7, wherein the silver nanowires dispersed in the liquid have an average aspect ratio of 250 or more, wherein the average aspect ratio is a ratio of the average length (nm) and the average diameter (nm).

9. A silver nanowire ink comprising silver nanowires in water or a mixed solvent of water and an alcohol, and a urethane resin added thereto, providing a haze of 0.8% or less in the form of a dried coated film having a sheet resistance of from 40 to 60 $\Omega$/sq.

10. The silver nanowire ink according to claim 9, wherein the silver nanowire ink provides a transmittance of light of 98.5% or more in the form of a dried coated film having a sheet resistance of from 40 to 60 $\Omega$/sq.

11. The silver nanowire ink according to claim 9, wherein the urethane resin has a polycarbonate skeleton.

12. The silver nanowire ink according to claim 9, wherein the silver nanowire ink has a content of the silver nanowires of from 0.01 to 2.0% by mass.

13. The silver nanowire ink according to claim 9, wherein the silver nanowire ink has an amount of the urethane resin added of from 0.005 to 2.0% by mass.

14. The silver nanowire ink according to claim 9, wherein the silver nanowire ink contains a viscosity modifier added thereto in an amount of from 0.01 to 2.0% by mass.

15. The silver nanowire ink according to claim 9, wherein the silver nanowires dispersed in the liquid have an average diameter of 50 nm or less and an average length of 10 $\mu$m or more.

16. The silver nanowire ink according to claim 15, wherein the silver nanowires dispersed in the liquid have an average aspect ratio of 250 or more, wherein the average aspect ratio is a ratio of the average length (nm) and the average diameter (nm).

17. A transparent conductive coated film comprising a dried coated film containing the silver nanowire ink according to claim 9 as a coating composition, having a sheet resistance of from 40 to 60 Ω/sq and a haze of 0.8% or less.

18. The transparent conductive coated film according to claim 17, wherein the transparent conductive coated film has a transmittance of light of 98.5% or more.

19. The transparent conductive coated film according to claim 17, wherein the substrate is glass, PET (polyethylene terephthalate), PEN (polyethylene naphthalate), PC (polycarbonate), PES (polyether sulfone), PAR (polyarylate), APO (amorphous polyolefin), or an acrylic resin.

## INTERNATIONAL SEARCH REPORT

| | International application No. |
|---|---|
| | PCT/JP2018/008699 |

**A. CLASSIFICATION OF SUBJECT MATTER**
Int.Cl. C09D11/52(2014.01)i, C09D5/24(2006.01)i, C09D7/40(2018.01)i,
C09D201/00(2006.01)i, H01B1/00(2006.01)i, H01B1/22(2006.01)i,
H01B5/14(2006.01)i, H01B13/00(2006 01)i
According to International Patent Classification (IPC) or to both national classification and IPC

**B. FIELDS SEARCHED**

Minimum documentation searched (classification system followed by classification symbols)
Int.Cl. C09D11/52, C09D5/24, C09D7/40, C09D201/00, H01B1/00, H01B1/22, H01B5/14,
H01B13/00

Documentation searched other than minimum documentation to the extent that such documents are included in the fields searched
Published examined utility model applications of Japan    1922-1996
Published unexamined utility model applications of Japan    1971-2018
Registered utility model specifications of Japan    1996-2018
Published registered utility model applications of Japan    1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2017-505509 A (C3NANO INC.) 16 February 2017, claims, paragraphs [0001], [0030]-[0038], [0061]-[0065], examples & US 2015/0144380 A1, claims, paragraphs [0001], [0042]-[0050], [0072]-[0076], examples & WO 2015/077145 A2 & EP 3072373 A2 & TW 201525086 A & CN 105874889 A & KR 10-2016-0118390 A | 1-5, 7-10, 12-19 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 March 2018 (30.03.2018) | 10 April 2018 (10.04.2018) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| | International application No. |
|---|---|
| | PCT/JP2018/008699 |

C (Continuation). DOCUMENTS CONSIDERED TO BE RELEVANT

| Category* | Citation of document, with indication, where appropriate, of the relevant passages | Relevant to claim No. |
|---|---|---|
| X | JP 2015-174922 A (DOWA ELECTRONICS MATERIALS CO., LTD.) 05 October 2015, claims, paragraphs [0010], [0019], [0027], [0034], examples & US 2017/005857 A1, claims, paragraphs [0011], [0023], [0031], [0034], examples & WO 2015/137421 A1 & EP 3118272 A1 & KR 10-2016-0134754 A & CN 106103610 A | 9-10, 12-19 |
| A | JP 2016-156000 A (XEROX CORPORATION) 01 September 2016, entire text & US 2016/0225482 A1, entire text | 1-19 |
| A | WO 2014/196354 A1 (SEIKO PMC CORPORATION) 11 December 2014, entire text & US 2016/0118156 A1, entire text & CN 105246962 A & KR 10-2016-0017063 A & TW 201446904 A | 1-19 |
| A | JP 2012-129176 A (FUJIFILM CORP.) 05 July 2012, entire text & US 2012/0024572 A1, entire text & WO 2011/078170 A1 & TW 201126542 A | 1-19 |
| A | WO 2016/152017 A1 (BANDO CHEMICAL INDUSTRIES, LTD.) 29 September 2016, entire text & KR 10-2017-0125068 A & TW 201704373 A | 1-19 |
| A | JP 2015-137338 A (DAICEL CORPORATION) 30 July 2015, entire text (Family: none) | 1-19 |
| A | JP 2010-244746 A (KONICA MINOLTA HOLDINGS, INC.) 28 October 2010, entire text (Family: none) | 1-19 |
| A | JP 2009-505358 A (CAMBRIOS TECHNOLOGIES CORP.) 05 February 2009, entire text & US 2007/0074316 A1, entire text & WO 2007/022226 A2 & EP 1922759 A2 & KR 10-2008-0066658 A & CN 101292362 A | 1-19 |
| A | JP 2016-060754 A (IDEMITSU KOSAN CO., LTD.) 25 April 2016, entire text (Family: none) | 1-19 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009505358 A
- JP 2015174922 A
- JP 2015180772 A
- JP 2016055283 A